(19) Europäisches Patentamt
European Patent Office
Office européen des brevets

(11) EP 3 578 617 A1

(12) **EUROPEAN PATENT APPLICATION**
published in accordance with Art. 153(4) EPC

(43) Date of publication:
**11.12.2019 Bulletin 2019/50**

(21) Application number: **17895066.3**

(22) Date of filing: **11.12.2017**

(51) Int Cl.:
***C09J 7/00*** *(2018.01)* ***C08G 18/72*** *(2006.01)*
***C09J 175/04*** *(2006.01)*

(86) International application number:
**PCT/JP2017/044362**

(87) International publication number:
**WO 2018/142769 (09.08.2018 Gazette 2018/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **31.01.2017 JP 2017015642**

(71) Applicant: **Bando Chemical Industries, Ltd.**
**Kobe-shi, Hyogo 650-0047 (JP)**

(72) Inventors:
- **TAKAGI, Daisuke**
  **Kobe-shi**
  **Hyogo 650-0047 (JP)**
- **NAITO, Hiroki**
  **Kobe-shi**
  **Hyogo 650-0047 (JP)**
- **HOSOKAWA, Yuki**
  **Kobe-shi**
  **Hyogo 650-0047 (JP)**

(74) Representative: **Müller-Boré & Partner Patentanwälte PartG mbB**
**Friedenheimer Brücke 21**
**80639 München (DE)**

(54) **OPTICALLY CLEAR ADHESIVE SHEET, METHOD FOR MANUFACTURING OPTICALLY CLEAR ADHESIVE SHEET, LAMINATE, AND BONDED STRUCTURE**

(57) The present invention provides an optically clear adhesive sheet preventing whitening and delay bubbles during storage in a high-humidity environment using a heat-cured polyurethane that has excellent flexibility and is capable of giving a thick film. The optically clear adhesive sheet contains a heat-cured polyurethane, the heat-cured polyurethane being a cured product of a thermosetting polyurethane composition containing a polyol component and a polyisocyanate component, the polyisocyanate component containing both a polyisocyanate having a hydrophilic unit and a polyisocyanate having no hydrophilic unit, the optically clear adhesive sheet showing a moisture absorption coefficient of 3600 ppm or lower after being subjected to a test in which the sheet is left in a high-temperature, high-humidity environment with a temperature of 85°C and a humidity of 85% for three hours.

EP 3 578 617 A1

**Description**

TECHNICAL FIELD

The present invention relates to optically clear adhesive sheets, methods for producing an optically clear adhesive sheet, laminates, and bonded structures.

BACKGROUND ART

Optically clear adhesive (OCA) sheets are transparent adhesive sheets used to bond optical members to each other. A recent rapid increase in demand for touchscreens in the fields of smartphones, tablet PCs, handheld game consoles, and automotive navigation systems is accompanied by an increase in demand for OCA sheets used to bond a touchscreen to another optical member. A typical display device with a touchscreen has a stacking structure of optical members including a display panel (e.g., liquid crystal panel), a transparent member (touchscreen main unit) having on its outer surface a transparent conductive film formed of a material such as indium tin oxide (ITO), and a cover panel that protects the transparent conductive film, with OCA sheets used to bond these optical members to each other. In between the display panel and the touchscreen main unit, however, is arranged typically an air layer called an air gap with no OCA sheet because there is a gap larger than gaps between the other optical members due to the edge of a bezel which is the housing of the display panel.

An air gap, which is an air layer, formed between optical members causes interfacial reflection because there are differences in refractive index between the air layer and the optical members. Such interfacial reflection impairs visibility of the display panel. This disadvantage has led to a demand for a thick OCA sheet suited to bonding of a display panel and a touchscreen main unit. Also, an OCA sheet used to bond a display panel and a touchscreen main unit is required to conform to an uneven surface on which the thick bezel is present. Accordingly, an OCA sheet has been desired which exhibits excellent flexibility (capability to conform to uneven surfaces) and has a large thickness.

Patent Literatures 1 to 3, for example, disclose techniques related to OCA sheets. Patent Literature 1 discloses an optical film including an adhesive layer on one or both surfaces of an optical film material. The adhesive layer has a saturated water absorption coefficient at 50°C and 90%RH of 0.60 wt% or lower and an adhesive strength to the adherend to be peeled in a 90° peel test of 600 g/20 mm or less.

Patent Literature 2 discloses an optical film including an adhesive layer on one or both surfaces of an optical film material having a heat shrinkage of 0.8% or higher at 90°C. The adhesive layer has a 100% modulus at 90°C of 2 to 4 $g/mm^2$, a tensile elongation at break of 3000% or higher, and a saturated water absorption coefficient at 50°C and 90%RH of 0.4 wt% or lower.

Patent Literature 3 discloses an adhesive sheet including a stack of an adhesive layer (A) and a pressure-sensitive adhesive layer (B). The adhesive layer (A) has a storage modulus of $1.0 \times 10^4$ Pa or higher at a temperature of 40°C and a frequency of 1.0 Hz and a storage modulus of lower than $1.0 \times 10^4$ Pa at a temperature of 70°C and a frequency of 1 Hz. The pressure-sensitive adhesive layer (B) has a storage modulus of $1.0 \times 10^4$ Pa or higher at a temperature of 40°C and a frequency of 1.0 Hz and a storage modulus of $1.0 \times 10^4$ Pa or higher at a temperature of 70°C and a frequency of 1 Hz.

CITATION LIST

- Patent Literature

Patent Literature 1: JP H09-281336 A
Patent Literature 2: JP H10-44293 A
Patent Literature 3: JP 2015-224320 A

SUMMARY OF INVENTION

- Technical Problem

The present inventors have focused on a solvent-free heat-cured polyurethane as a material of an OCA sheet that exhibits excellent flexibility and has a large thickness. However, their various studies on OCA sheets containing a heat-cured polyurethane found that in the case of storing the resulting OCA sheet bonded to a glass plate in a high-humidity environment such as a high-temperature, high-humidity environment (temperature: 85°C, humidity: 85%), the

OCA sheet is likely to peel from the glass plate to cause a problem of air bubbles that are generated later (i.e., delay bubbles) at the interface with the glass plate.

The studies made by the present inventors revealed that the delay bubbles are presumed to be caused mainly by a gas generated inside the optically clear adhesive sheets, and the gas mainly contains moisture. Such generation of delay bubbles is a phenomenon unique to heat-cured polyurethanes. For example, an OCA sheet formed of an acrylic resin composition does not cause the delay bubble problem because, although it is moisture absorptive in a high-temperature, high-humidity environment, it has high adhesive strength and high gas permeability. An OCA sheet formed of a silicone resin does not cause the delay bubble problem either because although it has low adhesive strength, it is very unlikely to absorb moisture in a high-temperature, high-humidity environment.

In the case where a heat-cured polyurethane having low moisture absorptivity is produced using a hydrophobic material in order to prevent delay bubbles, the polyurethane may turn white in a high-temperature, high-humidity environment.

The present invention has been made in view of the above current state of the art, and aims to provide an optically clear adhesive sheet preventing whitening and delay bubbles during storage in a high-humidity environment using a heat-cured polyurethane that has excellent flexibility and is capable of giving a thick film.

- Solution to Problem

The inventors made studies on increase in environment resistance of an optically clear adhesive sheet containing a heat-cured polyurethane. The studies revealed that use of a thermosetting polyurethane composition containing both a polyisocyanate having a hydrophilic unit and a polyisocyanate having no hydrophilic unit is effective in prevention of whitening and delay bubbles. The studies also found that the moisture absorption coefficient after a high-temperature, high-humidity test is useful as an index to adjust the moisture absorptivity of the heat-cured polyurethane. Limiting the moisture absorption coefficient after the high-temperature, high-humidity test within a specific range enables production of an optically clear adhesive sheet preventing whitening and delay bubbles in a high-humidity environment. Thereby, the inventors completed the present invention.

The optically clear adhesive sheet of the present invention is an optically clear adhesive sheet containing a heat-cured polyurethane, the heat-cured polyurethane being a cured product of a thermosetting polyurethane composition containing a polyol component and a polyisocyanate component, the polyisocyanate component containing both a polyisocyanate having a hydrophilic unit and a polyisocyanate having no hydrophilic unit, the optically clear adhesive sheet showing a moisture absorption coefficient of 3600 ppm or lower after being subjected to a test in which the sheet is left in a high-temperature, high-humidity environment with a temperature of 85°C and a humidity of 85% for three hours.

The optically clear adhesive sheet of the present invention preferably has a shear storage modulus at 85°C of $4 \times 10^3$ Pa or higher. The polyisocyanate having no hydrophilic unit may be an aliphatic isocyanate.

The method for producing an optically clear adhesive sheet according to the present invention is a method for producing the optically clear adhesive sheet of the present invention, the method including the steps of: preparing the thermosetting polyurethane composition by mixing the polyol component and the polyisocyanate component with stirring; and curing the thermosetting polyurethane composition.

The laminate of the present invention is a laminate including: the optically clear adhesive sheet of the present invention; a first release liner covering one surface of the optically clear adhesive sheet; and a second release liner covering the other surface of the optically clear adhesive sheet.

The bonded structure of the present invention includes: a first adherend; a second adherend; and the optically clear adhesive sheet of the present invention bonding the first adherend and the second adherend to each other.

- Advantageous Effects of Invention

The optically clear adhesive sheet of the present invention can prevent both whitening and delay bubbles during storage in a high-humidity environment while taking the advantage of the characteristics of the heat-cured polyurethane having excellent flexibility and being capable of giving a thick film.

The method for producing an optically clear adhesive sheet according to the present invention enables suitable production of the above optically clear adhesive sheet. The laminate of the present invention can improve the handleability of the optically clear adhesive sheet of the present invention. The bonded structure of the present invention can maintain a transparent bonding interface with no air bubbles.

BRIEF DESCRIPTION OF DRAWINGS

Fig. 1 is a schematic cross-sectional view of an exemplary display device with a touchscreen which includes the optically clear adhesive sheets of the present invention.

Fig. 2 shows a schematic view for illustrating an exemplary molding machine used in production of the optically clear adhesive sheet of the present invention.

Fig. 3 shows a schematic cross-sectional view of an optically clear adhesive sheet with release liners of Example 1.

Fig. 4 shows schematic views for illustrating the method for evaluating the adhesive strength of the optically clear adhesive sheets of examples and comparative examples.

DESCRIPTION OF EMBODIMENTS

The optically clear adhesive sheet of the present invention is an optically clear adhesive sheet containing a heat-cured polyurethane, the heat-cured polyurethane being a cured product of a thermosetting polyurethane composition containing a polyol component and a polyisocyanate component, the polyisocyanate component containing both a polyisocyanate having a hydrophilic unit and a polyisocyanate having no hydrophilic unit, the optically clear adhesive sheet showing a moisture absorption coefficient of 3600 ppm or lower after a test in which the sheet is left in a high-temperature, high-humidity environment with a temperature of 85°C and a humidity of 85% for three hours. The "optically clear adhesive sheet" as used herein has the same meaning as an "optically clear adhesive film".

The optically clear adhesive sheet of the present invention shows a moisture absorption coefficient of 3600 ppm or lower after being subjected to a test in which the sheet is left in a high-temperature, high-humidity environment with a temperature of 85°C and a humidity of 85% for three hours (hereinafter, the test is also simply referred to as "high-temperature, high-humidity test"). The studies made by the present inventors found that an optically clear adhesive sheet showing a moisture absorption coefficient of higher than 3600 ppm after the high-temperature, high-humidity test is likely to absorb moisture in the environment, and therefore tends to suffer peeling presumably caused by gasification of the absorbed moisture (delay bubbles due to moisture absorption) at the interface with the adherend. For example, peeling unfortunately occurs at sites such as the bonding interface between the optically clear adhesive sheet and the touchscreen in a high-temperature, high-humidity environment assumed to correspond to the use environment for devices such as in-vehicle displays or during long-term storage in the rainy season or a high-humidity environment. Also, a fine foreign matter may enter the bonding interface between the optically clear adhesive sheet and the touchscreen. Air bubbles expand around such a foreign matter and thus easily cause peeling. The moisture absorption coefficient after the high-temperature, high-humidity test is preferably 0 to 3600 ppm, more preferably 2600 to 3200 ppm. With a moisture absorption coefficient after the high-temperature, high-humidity test of lower than 2600 ppm, the optically clear adhesive sheet may turn white when exposed to a high-temperature, high-humidity environment.

The moisture absorption coefficient after the high-temperature, high-humidity test can be controlled by adjusting the composition and/or heat-curing conditions of the thermosetting polyurethane composition, which is the material of the heat-cured polyurethane. For example, the factors that can be adjusted include the $\alpha$ ratio, the amount or kind (molecular weight) of the hydrophilic unit in the polyisocyanate component, the ratio (e.g., mole ratio) between the polyisocyanate having a hydrophilic unit and the polyisocyanate having no hydrophilic unit, whether or not adding a plasticizer and the amount of the plasticizer to be added, and the crosslinking temperature.

The optically clear adhesive sheet of the present invention preferably has a shear storage modulus (G') at 85°C of $4 \times 10^3$ Pa or higher. The studies made by the present inventors found that the shear storage modulus at 85°C is useful as the adhesiveness index. If the shear storage modulus at 85°C is lower than $4 \times 10^3$ Pa, the adhesive strength at 85°C, which is a high temperature, significantly decreases from the adhesive strength in a normal-temperature environment, so that the sheet is likely to peel from the adherend in a high-temperature environment. Thereby, the delay bubble defect due to moisture absorption tends to occur. The shear storage modulus at 85°C is preferably 4000 to 100000 Pa, more preferably 10000 to 50000 Pa. If the shear storage modulus at 85°C is higher than 100000 Pa, the optically clear adhesive sheet may be very rigid and thus exhibit low capability to conform to uneven surfaces (e.g., uneven surfaces with decoration) of the adherend, increasing the likelihood of bonding failure.

The shear storage modulus at 85°C can be controlled by adjusting the composition and/or heat-curing conditions of the thermosetting polyurethane composition, which is the material of the heat-cured polyurethane. For example, the factors that can be adjusted include the $\alpha$ ratio (the number of moles of OH groups derived from polyol component/the number of moles of NCO groups derived from polyisocyanate component), the amount or kind (molecular weight) of the hydrophilic unit in the polyisocyanate component, the ratio (e.g., mole ratio) between the polyisocyanate having a hydrophilic unit and the polyisocyanate having no hydrophilic unit, whether or not adding a plasticizer and the amount of the plasticizer to be added, and the crosslinking temperature.

The optically clear adhesive sheet of the present invention contains a heat-cured polyurethane. The heat-cured polyurethane is a cured product of a polyurethane composition containing a polyol component and a polyisocyanate component. The polyurethane composition is cured by reacting the polyol component and the polyisocyanate component, and the resulting cured product has a structure represented by the following formula (A).

[Chem. 1]

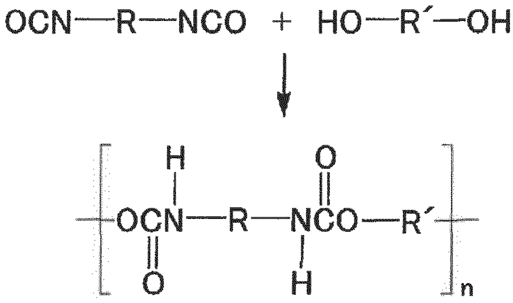

(A)

In the formula (A), R represents a non-NCO-group moiety of a polyisocyanate component, R' represents a non-OH-group moiety of a polyol component, and n represents the number of repeating units.

The heat-cured polyurethane is preferably not an acrylic-modified one, and preferably contains no moiety derived from, for example, an acrylic ester or a methacrylic ester in the main chain. An acrylic-modified heat-cured polyurethane is hydrophobic and is thus likely to cause moisture condensation in a high-temperature, high humidity environment. The moisture condensation may cause defects such as whitening and foaming to damage the optical characteristics. A non-acrylic-modified heat-cured polyurethane can prevent deterioration of the optical characteristics due to defects such as whitening and foaming in high-temperature, high-humidity environments. The heat-cured polyurethane preferably contains a total of 80 mol% or more of monomer units derived from a polyol component and monomer units derived from a polyisocyanate component relative to all the monomer units constituting the heat-cured polyurethane. More preferably, the heat-cured polyurethane consists of monomer units derived from a polyol component and monomer units derived from a polyisocyanate component.

Both the polyol component and the polyisocyanate component can be components that are liquids at normal temperature (23°C), so that a heat-cured polyurethane can be obtained without a solvent. Other components such as a tackifier can be added to the polyol component or the polyisocyanate component, and are preferably added to the polyol component. Production of an optically clear adhesive sheet using a thermosetting polyurethane composition, which requires no removal of a solvent, enables formation of a thick sheet with an even surface. The optically clear adhesive sheet of the present invention, when used to bond a display panel and a transparent member (touchscreen) having on its outer surface a transparent conductive film, can therefore conform to an uneven surface on which the bezel is present. Also, the optically clear adhesive sheet of the present invention obtained using a thermosetting polyurethane composition can keep its optical characteristics even in the case of having a large thickness, and thus can sufficiently prevent transparency decrease (haze increase), coloring, and foaming (generation of air bubbles at the interface with the adherend).

Containing a heat-cured polyurethane, the optically clear adhesive sheet of the present invention is flexible and elongated well and very unlikely to be torn under tensile stress. The optically clear adhesive sheet can therefore be peeled off without adhesive residue. Since the optically clear adhesive sheet of the present invention has a large thickness while being flexible, the optically clear adhesive sheet is excellent in shock resistance and can be used to bond a transparent member having a transparent conductive film on its outer surface to a cover panel. In the case of using an additional member, the optically clear adhesive sheet can also be used to bond the display panel or the transparent member having a transparent conductive film on its outer surface to the additional member. The optically clear adhesive sheet of the present invention, containing a heat-cured polyurethane, has a high dielectric constant and can give a higher capacitance than conventional optically clear adhesive sheets formed of an acrylic resin composition. The optically clear adhesive sheet of the present invention is therefore suitable for bonding of a capacitive touchscreen.

[Polyol component]

Examples of the polyol component include, but are not particularly limited to, polyether polyols, polycaprolactone polyols, polycarbonate polyols, and polyester polyols. These may be used alone or in combination with each other.

Examples of the polyether polyols include polyalkylene glycols such as polyethylene glycol, polypropylene glycol, polypropylene triol, polypropylene tetraol, polytetramethylene glycol, polytetramethylene triol, copolymers thereof; derivatives obtained by introducing a side chain or a branched structure to any of these polyalkylene glycols, modified products thereof, and mixtures thereof.

Examples of the polycaprolactone polyols include polycaprolactone glycol, polycaprolactone triol, polycaprolactone tetraol, derivatives obtained by introducing a side chain or a branched structure to any of these, modified products thereof, and mixtures thereof.

Examples of the polycarbonate polyols include a reaction product of a dialkyl carbonate and a diol.

Examples of the dialkyl carbonate include dialkyl carbonates such as dimethyl carbonate and diethyl carbonate; diaryl carbonates such as diphenyl carbonate; and alkylene carbonates such as ethylene carbonate. These may be used alone or in combination with each other.

Examples of the diol include 1,4-butanediol, diethylene glycol, 1,5-pentanediol, 1,6-hexanediol, 1,7-heptanediol, 1,8-octanediol, 2-methyl-1,8-octanediol, 1,9-nonanediol, 1,10-dodecanediol, 2-ethyl-1,6-hexanediol, 3-methyl-1,5-pentanediol, 2,4-dimethyl-1,5-pentanediol, neopentyl glycol, 1,3-cyclohexanediol, 1,4-cyclohexanediol, 1,4-cyclohexanedimethanol, and 2,2'-bis(4-hydroxycyclohexyl)-propane. These may be used alone or in combination with each other. The diol is preferably a C4-C9 alicyclic or alicyclic diol. For example, 1,4-butanediol, diethylene glycol, 1,5-pentanediol, 1,6-hexanediol, 3-methyl-1,5-pentanediol, 2,4-dimethyl-1,5-pentanediol, 1,4-cyclohexanedimethanol, 1,7-heptanediol, 1,8-octanediol, 2-methyl-1,8-octanediol, and 1,9-nonanediol are preferably used alone or in combination with each other. The diol is also preferably a copolycarbonate diol of 1,6-hexanediol and 3-methyl-1,5-pentanediol or a copolycarbonate diol of 1,6-hexanediol and 1,5-pentanediol.

The examples of the polycarbonate polyols also include polycarbonate glycol, polycarbonate triol, polycarbonate tetraol, derivatives obtained by introducing a side chain or a branched structure to any of these, modified products thereof, and mixtures thereof.

Examples of the polyester polyols include products obtained by dehydration condensation of a dicarboxylic acid and a glycol component.

Examples of the dicarboxylic acid include aromatic dicarboxylic acids such as terephthalic acid, isophthalic acid, and 2,6-naphthalenedicarboxylic acid; oxalic acid, malonic acid, succinic acid, glutaric acid, adipic acid, azelaic acid, and sebacic acid.

Examples of the glycol component include aliphatic glycols such as ethylene glycol, 1,4-butanediol, diethylene glycol, neopentyl glycol, 3-methyl-1,5-pentanediol, 1,5-pentanediol, 1,9-nonanediol, and triethylene glycol; alicyclic glycols such as 1,4-cyclohexanedimethanol; aromatic diols such as p-xylenediol; and polyoxyalkylene glycols such as polyethylene glycol, polypropylene glycol, and polyoxytetramethylene glycol.

Polyester polyols formed of any of dicarboxylic acids and glycol components mentioned above have a linear molecular structure, but may be a polyester having a branched molecular structure obtained using a trivalent or higher valent ester-forming component. The dicarboxylic acid and the glycol component are reacted with a mole ratio of 1.1 to 1.3 at 150°C to 300°C.

The polyol component preferably has a number average molecular weight of 300 or more and 5000 or less. If the polyol component has a number average molecular weight of less than 300, the polyol component and the polyisocyanate component may react with each other very fast and the resulting heat-cured polyurethane may be difficult to mold into a sheet with an even surface or the heat-cured polyurethane may be less flexible and be fragile. If the polyol component has a number average molecular weight of more than 5000, problems may arise such as that the polyol component may have a very high viscosity to cause difficulty in molding the heat-cured polyurethane into a sheet with an even surface or that the heat-cured polyurethane may crystallize to make the product clouded in white. The polyol component more preferably has a number average molecular weight of 500 or more and 2000 or less.

The polyol component preferably has an olefin skeleton, meaning that its main chain preferably includes a polyolefin or a derivative thereof. Examples of the polyol component having an olefin skeleton include polybutadiene-based polyols such as 1,2-polybutadiene polyol, 1,4-polybutadiene polyol, 1,2-polychloroprene polyol, and 1,4-polychloroprene polyol, polyisoprene-based polyols, and saturated compounds obtained by adding hydrogen or halogen atoms to the double bonds of these polyols, for example. The polyol component may be a polyol obtained by copolymerizing a polybutadiene-based polyol, for example, with an olefin compound, such as styrene, ethylene, vinyl acetate, or acrylic ester, or a hydrogenated compound thereof. The polyol component may have a linear or branched structure. These compounds having an olefin skeleton for the polyol component may be used alone or in combination with each other. The polyol component preferably includes 80 mol% or more of a polyol component having an olefin skeleton, and more preferably consists of a polyol component having an olefin skeleton.

Known examples of the polyol component having an olefin skeleton include a polyolefin polyol obtained by hydrogenating a hydroxy group-terminated polyisoprene ("EPOL®" available from Idemitsu Kosan Co., Ltd., number average molecular weight: 2500), both-end hydroxy group-terminated hydrogenated polybutadiene ("GI-1000" available from Nippon Soda Co., Ltd., number average molecular weight: 1500), and polyhydroxy polyolefin oligomer ("POLYTAIL®" available from Mitsubishi Chemical Corporation).

[Polyisocyanate component]

The polyisocyanate component contains both a polyisocyanate having a hydrophilic unit (hydrophilic group) and a polyisocyanate having no hydrophilic unit. The polyisocyanate component, when containing the polyisocyanate having a hydrophilic unit, tends to cause moisture absorption. It is therefore especially important to adjust the moisture

absorption coefficient after the high-temperature, high-humidity test.

The hydrophilic unit means a constituent unit having a solubility parameter (SP value) of 8.5 $MPa^{1/2}$ or higher, and is preferably a constituent unit having an SP value of 9.0 $MPa^{1/2}$ or higher. The SP value can be calculated by the Fedors method (R. F. Fedors: Polym. Eng. Sci., 14[2], 147-154 (1974)). How to calculate an SP value by the Fedors method is also described in, for example, the paper entitled "Study on Solubility Parameter of Paint Additives" included in "Research on Coatings, Vol. 152 (October 2010)" published by Kansai Paint Co., Ltd. The hydrophilic unit means a moiety with a hydrophilic functional group added to a polyisocyanate, differently from an isocyanate group-derived structure such as an isocyanurate structure or a biuret structure.

The hydrophilic unit is preferably an ethylene oxide unit. A thermosetting polyurethane composition containing the hydrophilic unit can prevent whitening due to moisture absorption. The ethylene oxide unit content is preferably 0.1 wt% or more and 20 wt% or less of the whole thermosetting polyurethane composition. If the ethylene oxide unit content is less than 0.1 wt%, whitening may not be sufficiently prevented. If the ethylene oxide unit content is more than 20 wt%, the polyisocyanate component may have a low miscibility with low-polarity components such as an olefin-based polyol component, a tackifier, and a plasticizer, damaging optical characteristics such as haze. The ethylene oxide unit content is more preferably 0.1 to 5 wt%. If the ethylene oxide unit content is more than 5 wt%, the resulting optically clear adhesive sheet may have an excessively high moisture absorption in the high-temperature, high-humidity environment.

Examples of the hydrophilic unit other than the ethylene oxide unit include units containing groups derived from a carboxylic acid, an alkali metal salt of a carboxylic acid, a sulfonic acid, or an alkali metal salt of a sulfonic acid, a hydroxy group, an amide group, or an amino group. Specific examples thereof include units derived from polyacrylic acid, an alkali metal salt of polyacrylic acid, a copolymer containing a sulfonic acid, an alkali metal salt of a copolymer containing a sulfonic acid, polyvinyl alcohol, polyacrylamide, carboxymethyl cellulose, an alkali metal salt of carboxymethyl cellulose, or polyvinylpyrrolidone.

A suitable polyisocyanate containing a hydrophilic unit is a modified polyisocyanate obtained by, for example, reacting an aliphatic polyisocyanate with an ether compound having an ethylene oxide unit. An aliphatic polyisocyanate can reduce the chances of coloring or discoloration of the optically clear adhesive sheet and enables the optically clear adhesive sheet to exhibit long-lasting transparency with higher reliability. Also, being modified with an ether compound having an ethylene oxide unit, the polyisocyanate component can prevent whitening owing to its hydrophilic moiety (ethylene oxide unit) and can exhibit miscibility with low-polarity components such as a tackifier and a plasticizer owing to its hydrophobic moiety (the other units).

Specific examples of the aliphatic polyisocyanate include hexamethylene diisocyanate, tetramethylene diisocyanate, 2-methyl-pentane-1,5-diisocyanate, 3-methylpentane-1,5-diisocyanate, lysine diisocyanate, trioxyethylene diisocyanate, isophorone diisocyanate, cyclohexyl diisocyanate, 4,4'-dicyclohexylmethane diisocyanate, norbornane diisocyanate, hydrogenated tolylene diisocyanate, hydrogenated xylene diisocyanate, hydrogenated tetramethyl xylene diisocyanate, and modified products thereof. These compounds may be used alone or in combination with each other. Examples of the modified products of hexamethylene diisocyanate include isocyanurate-modified, allophanate-modified, or urethane-modified products of hexamethylene diisocyanate.

Examples of the ether compound having an ethylene oxide unit include alcohol-, phenol-, or amine-ethylene oxide adducts. In order to improve the hydrophilicity, ether compounds having three or more ethylene oxide units per molecule are preferred.

Examples of the alcohol include monovalent alcohols, divalent alcohols (e.g., ethylene glycol, diethylene glycol, propylene glycol, dipropylene glycol, 1,4-butanediol, 1,6-hexanediol, 1,3-butylenediol, neopentyl glycol), and trivalent alcohols (e.g., glycerol, trimethylol propane). These may be used alone or in combination with each other.

Examples of the phenol include hydroquinone, bisphenols (e.g., bisphenol A, bisphenol F), and phenolformaldehyde condensates with a low condensation degree (novolac resin and resol prepolymers). These may be used alone or in combination with each other.

The number of isocyanate groups per molecule of the modified polyisocyanate is preferably 2.0 or more on average. If the number of isocyanate groups is less than 2.0 on average, the crosslinking density may be low, leading to insufficient curing of the thermosetting polyurethane composition.

The polyisocyanate having no hydrophilic unit is preferably, but is not particularly limited to, an aliphatic isocyanate. Examples thereof include hexamethylene diisocyanate (HDI), tetramethylene diisocyanate, 2-methyl-pentane-1,5-diisocyanate, 3-methylpentane-1,5-diisocyanate, lysine diisocyanate, trioxyethylene diisocyanate, isophorone diisocyanate (IPDI), cyclohexyl diisocyanate, 4,4'-dicyclohexylmethane diisocyanate (hydrogenated MDI), norbornane diisocyanate (NBDI, the following formula), hydrogenated tolylene diisocyanate, hydrogenated xylene diisocyanate, hydrogenated tetramethylxylene diisocyanate, and modified products thereof. These may be used alone or in combination with each other.

[Chem. 2]

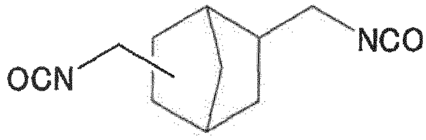

The blending ratio between the polyisocyanate having a hydrophilic unit and the polyisocyanate having no hydrophilic unit is preferably 9:1 to 1:9, more preferably 7:3 to 3:7, for simultaneous achievement of whitening prevention and moisture absorption coefficient decrease.

The polyurethane composition preferably has an $\alpha$ ratio (the number of moles of OH groups derived from polyol component/the number of moles of NCO groups derived from polyisocyanate component) of 1 or higher. An $\alpha$ ratio of lower than 1 suggests that the amount of the polyisocyanate component is excessive for the amount of the polyol component and thus the heat-cured polyurethane is rigid, which makes it difficult to achieve the flexibility required for the optically clear adhesive sheet. With a low flexibility, an optically clear adhesive sheet cannot conform to a rough, uneven bonding surface of the adherend, especially an optical member such as a touchscreen. Also, the adhesive strength required for the optically clear adhesive sheet may not be ensured. The $\alpha$ ratio more preferably satisfies the inequality $1.3 < \alpha < 2.0$. If the $\alpha$ ratio is 2.0 or higher, the thermosetting polyurethane composition may not be sufficiently cured.

[Tackifier]

The thermosetting polyurethane composition may further contain a tackifier (adhesion-imparting agent). A tackifier is an additive that is added to enhance the adhesive strength, and is typically an amorphous oligomer having a molecular weight of several hundreds to several thousands which is a thermoplastic resin in a liquid or solid state at normal temperature. A thermosetting polyurethane composition containing a tackifier can increase the adhesive strength of an optically clear adhesive sheet containing a cured product of the thermosetting polyurethane composition.

Examples of the tackifier include, but are not particularly limited to, petroleum resin-based tackifiers, hydrocarbon resin-based tackifiers, rosin-based tackifiers, and terpene-based tackifiers. These may be used alone or in combination with each other.

The tackifier is preferably a petroleum resin-based tackifier because it has excellent miscibility with, for example, the polyol component having an olefin skeleton. An especially preferred petroleum resin-based tackifier is a hydrogenated petroleum resin obtained by hydrogenating a copolymer of dicyclopentadiene and an aromatic compound. Dicyclopentadiene is obtainable from a C5 fraction. Examples of the aromatic compound include vinyl aromatic compounds such as styrene, $\alpha$-methylstyrene, and vinyl toluene. The ratio of dicyclopentadiene to a vinyl aromatic compound is not particularly limited, but the ratio by weight of dicyclopentadiene to a vinyl aromatic compound (dicyclopentadiene:vinyl aromatic compound) is preferably 70:30 to 20:80, more preferably 60:40 to 40:60. The hydrogenated petroleum resin has a softening point of preferably 90°C to 160°C, a vinyl aromatic compound unit content of preferably 35 mass% or less, a bromine value of preferably 0 to 30 g/100 g, and a number average molecular weight of preferably 500 to 1100. Known examples of the hydrogenated petroleum resin include "I-MARV P-100" available from Idemitsu Kosan Co., Ltd.

The tackifier is also preferably a hydrocarbon resin-based tackifier because it has excellent miscibility with, for example, the polyol component having an olefin skeleton. An especially preferred hydrocarbon resin-based tackifier is an alicyclic saturated hydrocarbon resin. Known examples of the alicyclic saturated hydrocarbon resin include "ARKON P-100" available from Arakawa Chemical Industries, Ltd.

The tackifier preferably has an acid value of 1 mgKOH/g or less. The tackifier with an acid value of 1 mgKOH/g or less can be sufficiently prevented from inhibiting the reaction between the polyol component and the polyisocyanate component. The tackifier preferably has a softening point of 80°C or higher and 120°C or lower, more preferably 80°C or higher and 100°C or lower. With a softening point of 80°C or higher and 120°C or lower, thermal deterioration of the polyol component can be sufficiently avoided when the tackifier is dissolved in the polyol component.

The tackifier content is preferably 1 wt% or more and 20 wt% or less of the thermosetting polyurethane composition. If the tackifier content is less than 1 wt%, the resulting optically clear adhesive sheet may exhibit insufficient adhesive strength, especially in high-temperature, high-humidity environments. If the tackifier content is more than 20 wt%, the tackifier may inhibit the reaction between the polyol component and the polyisocyanate component to cause insufficient urethane crosslinking in the heat-cured polyurethane. As a result, the resulting optically clear adhesive sheet may be melted and deformed or cause tackifier separation (bleeding) in high-temperature, high-humidity environments. Also, if the reaction duration for the polyol component and the polyisocyanate component is lengthened to allow sufficient urethane crosslinking, the productivity decreases.

[Plasticizer]

The thermosetting polyurethane composition may further contain a plasticizer. Addition of a plasticizer decreases the rigidity, thereby improving the handleability of the optically clear adhesive sheet of the present invention and the capability of the optically clear adhesive sheet to conform to uneven surfaces. The addition of a plasticizer may possibly reduce the adhesive strength, but the optically clear adhesive sheet of the present invention, even with such reduced adhesive strength, can ensure sufficient adhesive strength.

The plasticizer may be any compound that is used to impart flexibility to a thermoplastic resin, and preferably contains a carboxylic acid-based plasticizer in terms of miscibility and weather resistance. Examples of the carboxylic acid-based plasticizer include phthalic esters (phthalic acid-based plasticizers) such as diundecyl phthalate, dioctyl phthalate, diisononyl phthalate, diisodecyl phthalate, and dibutyl phthalate; 1,2-cyclohexanedicarboxylic acid diisononyl ester; adipic acid esters; trimellitic acid esters; maleic acid esters; benzoic acid esters; and poly-$\alpha$-olefin. These may be used alone or in combination with each other. Known examples of the carboxylic acid-based plasticizer include "DINCH" available from BASF, "SANSO CIZER DUP" available from New Japan Chemical Co., Ltd., and "Durasyn® 148" available from Ineous Oligomers.

[Catalyst]

The thermosetting polyurethane composition may further contain a catalyst. The catalyst may be any catalyst that is used in a urethane modification reaction. Examples thereof include organotin compounds such as di-n-butyltin dilaurate, dimethyltin dilaurate, dibutyltin oxide, and tin octanoate; organotitanium compounds; organozirconium compounds; tin carboxylates; bismuth carboxylates; and amine-based catalysts such as triethylene diamine.

The catalyst is preferably a non-amine-based catalyst. In the case of using an amine-based catalyst, the optically clear adhesive sheet may be easily discolored. More preferred as the catalyst is dimethyltin dilaurate.

The amount of the catalyst added is preferably 0.01 wt% or more and 0.1 wt% or less of the total amount of the polyol component and the polyisocyanate component.

The thermosetting polyurethane composition may further contain a monoisocyanate component. The monoisocyanate component is a compound containing one isocyanate group in a molecule. Specific examples thereof include octadecyl diisocyanate (ODI), 2-methacryloyloxyethyl isocyanate (MOI), 2-acryloyloxyethyl isocyanate (AOI), octyl isocyanate, heptyl isocyanate, ethyl 3-isocyanatopropionate, cyclopentyl isocyanate, cyclohexyl isocyanate, 1-isocyanato-2-methoxyethane, ethyl isocyanatoacetate, butyl isocyanatoacetate, and p-toluenesulfonyl isocyanate. These may be used alone or in combination with each other. The thermosetting polyurethane composition preferably contains no monoisocyanate component.

The thermosetting polyurethane composition may contain, as necessary, various additives such as colorants, stabilizers, antioxidants, antifungal agents, and flame retardants as long as the characteristics required for the optically clear adhesive sheet are not damaged.

The optically clear adhesive sheet of the present invention preferably has a thickness of 100 $\mu$m or more and 3000 $\mu$m or less. An optically clear adhesive sheet having a thickness of less than 100 $\mu$m, when one of its surfaces is bonded to the surface of an optical member, may not be able to conform to a rough, uneven surface of the optical member. As a result, the other surface of the optically clear adhesive sheet may fail to be bonded to another optical member with a sufficient adhesive strength. An optically clear adhesive sheet having a larger thickness absorbs more moisture, and therefore tends to cause delay bubbles due to moisture absorption. Still, with a thickness of 3000 $\mu$m or less, the optically clear adhesive sheet can sufficiently prevent delay bubbles due to moisture absorption when the shear storage modulus at 85°C and the moisture absorption coefficient after the high-temperature, high-humidity test are adjusted as in the present invention. The lower limit of the thickness of the optically clear adhesive sheet is more preferably 150 $\mu$m, still more preferably 250 $\mu$m. The upper limit of the thickness of the optically clear adhesive sheet is more preferably 2000 $\mu$m. The optically clear adhesive sheet preferably has a thickness that is triple or more the height of the highest peak of a rough, uneven bonding surface of the adherend.

The optically clear adhesive sheet of the present invention preferably has an adhesive strength of 5 N/25 mm or more as measured by a 180° peel test. If the adhesive strength is less than 5 N/25 mm, delay bubbles may not be prevented even when the shear storage modulus at 85°C and the moisture absorption coefficient after the high-temperature, high-humidity test are brought within the respective ranges defined in the present invention. The lower limit of the adhesive strength is more preferably 7 N/25 mm, still more preferably 10 N/25 mm, and the upper limit thereof is preferably 15 N/25 mm. The optically clear adhesive sheet having an adhesive strength of 15 N/25 mm or less, when used to bond an optical member such as a touchscreen to another optical member, can be peeled off without adhesive residue, exhibiting excellent reworkability. If the adhesive strength of the optically clear adhesive sheet is very high, it may be difficult to remove air bubbles present between the optically clear adhesive sheet and the adherend. The details of the 180° peel test are described below.

The optically clear adhesive sheet of the present invention preferably has a micro rubber hardness (type A) of 0.5° or higher and 25° or lower. An optically clear adhesive sheet having a micro rubber hardness (type A) of lower than 0.5° may exhibit low handleability in use (during bonding to an optical member) and may be deformed. In contrast, an optically clear adhesive sheet having a micro rubber hardness (type A) of higher than 25° may exhibit low flexibility and, during bonding to an optical member, may fail to conform to the surface shape of the optical member and include air between itself and the optical member. This may eventually cause peeling of the sheet from the optical member. Also, an optically clear adhesive sheet having low flexibility may fail to conform to an uneven surface on which the bezel is present, during bonding of an optical member such as a touchscreen to another optical member. The upper limit of the micro rubber hardness (type A) of the optically clear adhesive sheet is more preferably 15°. The micro rubber hardness (type A) can be measured with, for example, a micro durometer "MD-1 Type A" available from Kobunshi Keiki Co., Ltd. The micro durometer "MD-1 Type A" is a durometer designed and produced as an approximately 1/5-sized compact model of a spring type A durometer, and is capable of giving the same measurement result as a spring type A durometer even when the measuring object is thin.

The optically clear adhesive sheet of the present invention preferably has a haze of 0.5% or lower and a total light transmittance of 90% or higher in order to have the optically clear adhesive sheet characteristics. The haze and the total light transmittance can each be measured with, for example, a turbidity meter "Haze Meter NDH2000" available from Nippon Denshoku Industries Co., Ltd. The haze is measured by a process in accordance with JIS K 7136, and the total light transmittance is measured by a process in accordance with JIS K 7361-1.

The optically clear adhesive sheet of the present invention may have a release liner on each surface. A laminate including the optically clear adhesive sheet of the present invention, a first release liner covering one surface of the optically clear adhesive sheet, and a second release liner covering the other surface of the optically clear adhesive sheet (hereinafter, such a laminate is referred to as "the laminate of the present invention") is also one aspect of the present invention. The first and second release liners can protect the surfaces of the optically clear adhesive sheet of the present invention until immediately before being bonded to an adherend. The release liners therefore prevent deterioration of adhesion and sticking of foreign matters. Also, the release liners can prevent the surfaces from being bonded to something other than the adherend, improving the handleability of the optically clear adhesive sheet of the present invention.

The first and second release liners can each be, for example, a polyethylene terephthalate (PET) film. The materials of the first release liner and the second release liner may be the same as or different from each other, and the thicknesses thereof may also be the same as or different from each other.

The bonding strength (peel strength) between the optically clear adhesive sheet of the present invention and the first release liner and the bonding strength between the optically clear adhesive sheet of the present invention and the second release liner are preferably different from each other. Such a difference in bonding strength makes it easy to peel one of the first and second release liners (release liner with lower bonding strength) alone from the laminate of the present invention and bond the exposed first surface of the optically clear adhesive sheet and the first adherend to each other, followed by peeling the other of the first and second release liners (release liner with higher bonding strength) and then bonding the exposed second surface of the optically clear adhesive sheet and the second adherend to each other. Easy-peel treatment (release treatment) may be conducted on one or both of the surface of the first release liner coming into contact with the optically clear adhesive sheet of the present invention and the surface of the second release liner coming into contact with the optically clear adhesive sheet of the present invention. Examples of the easy-peel treatment include siliconizing.

Application of the optically clear adhesive sheet of the present invention is not particularly limited. A bonded structure including a first adherend; a second adherend; and the optically clear adhesive sheet of the present invention bonding the first adherend and the second adherend to each other is also one aspect of the present invention. Examples of the first and second adherends include various panels in a display device, such as a display panel, a touchscreen, and a cover panel; polarizers, resin plates, and glass plates. Bonding the panels in a display device with the optically clear adhesive sheet of the present invention can eliminate the air layer (air gap) in the display device and thereby increase the visibility of the display screen. Examples of the bonded structure of the present invention include a display device with a touchscreen, including the optically clear adhesive sheet of the present invention, a display panel, and a touchscreen. The bonding surface of a polarizer is made of a material such as triacetyl cellulose (TAC) and the bonding surface of a resin plate is made of a material such as polycarbonate. The optically clear adhesive sheet of the present invention exhibits favorable adhesion not only to glass but also to these resins. Also, the optically clear adhesive sheet of the present invention can prevent scattering of glass when bonded to a glass plate.

Fig. 1 shows a schematic cross-sectional view of an exemplary display device with a touchscreen which includes the optically clear adhesive sheet of the present invention. A display device 10 shown in Fig. 1 includes a display panel 11, an optically clear adhesive sheet 12, a touchscreen (glass substrate with an ITO transparent conductive film) 13, another optically clear adhesive sheet 12, and a transparent cover panel 14 stacked in the given order. The three optical members, namely the display panel 11, the touchscreen 13, and the transparent cover panel 14, are integrated into one member with the two optically clear adhesive sheets 12 of the present invention. The display panel 11 can be of any

type, such as a liquid crystal panel or an organic electroluminescent panel (organic EL panel). The touchscreen 13 can be, for example, a resistive touchscreen or a capacitive touchscreen.

The display panel 11 is housed in a bezel (housing for the display panel 11) 11A provided with an opening on the display surface side. The outer edge of the opening of the bezel 11A has produced the uneven surface with peaks corresponding to the thickness of the bezel 11A. The optically clear adhesive sheet 12 bonded covers the display surface sides of the display panel 11 and the bezel 11A to conform to the uneven surface with peaks corresponding to the thickness of the bezel 11A. In order to conform to the uneven surface with peaks corresponding to the thickness of the bezel 11A, the optically clear adhesive sheet 12 is required to have flexibility and to be thicker than the bezel 11A. In this manner, the optically clear adhesive sheet used to bond an optical member to the display panel 11 housed in the bezel 11A preferably has a thickness of 700 $\mu$m or more, for example. The optically clear adhesive sheet of the present invention exhibits sufficient optical characteristics and flexibility even in the case of having a thickness of 700 $\mu$m or more, and is therefore suited to bonding of an optical member to the display panel 11 housed in the bezel 11A.

The optically clear adhesive sheet of the present invention employed in such a display device is less likely to decrease in the adhesive strength under various conditions, and enables lasting, tight bonding of the optical members. As a result, no gap is formed between the optical members and the optically clear adhesive sheet, so that impairment of visibility due to factors such as an increase in the interfacial reflection can be prevented. In particular, the optically clear adhesive sheet of the present invention can be used in in-vehicle display devices such as display devices assembled into automotive navigation systems or in display devices for mobile devices such as smartphones.

The optically clear adhesive sheet of the present invention may be produced by any method such as a method in which a thermosetting polyurethane composition is prepared, and then the composition is molded while being heat-cured by a known method. The method preferably includes the steps of preparing a thermosetting polyurethane composition by mixing a polyol component and a polyisocyanate component with stirring, and curing the thermosetting polyurethane composition.

The following is an example of the production method. First, a masterbatch is prepared by adding a given amount of a tackifier to a polyol component and dissolving the tackifier by stirring while heating. The obtained masterbatch, an additional polyol component, and a polyisocyanate component as well as other components such as a catalyst as necessary are mixed with stirring using a mixer, for example, so that a liquid or gel thermosetting polyurethane composition is obtained. The thermosetting polyurethane composition is immediately fed into a molding machine such that the thermosetting polyurethane composition is crosslinked and cured while being transported in the state of being sandwiched between the first and second release liners. Thereby, the thermosetting polyurethane composition is semi-cured into a sheet integrated with the first and second release liners. The sheet is then crosslinked in a furnace for a given period of time, whereby an optically clear adhesive sheet containing a cured product of the thermosetting polyurethane composition is obtained. Through these steps, the laminate of the present invention is formed.

Fig. 2 shows a schematic view for illustrating an exemplary molding machine used in production of the optically clear adhesive sheet of the present invention. In a molding machine 20 shown in Fig. 2, a liquid or gel uncured thermosetting polyurethane composition 23 is poured between paired release liners (PET films) 21 continuously fed by paired molding rollers 22 which are disposed with a space in between. With the thermosetting polyurethane composition 23 being retained between the release liners 21, the composition is transported into a heating machine 24 while being cured (crosslinked). In the heating machine 24, the thermosetting polyurethane composition 23 is heat-cured while being retained between the release liners (PET films) 21, whereby molding of the optically clear adhesive sheet 12 containing a cured product of the thermoplastic polyurethane composition is completed.

The method for producing the optically clear adhesive sheet of the present invention may include, after preparation of an uncured thermosetting polyurethane composition, film formation using a general film-forming machine (e.g., any of various coating machines, bar coater, doctor blade) or by a film-forming treatment. The optically clear adhesive sheet of the present invention may alternatively be produced by centrifugal molding.

## EXAMPLES

The present invention is described in more detailed below based on examples. The examples, however, are not intended to limit the scope of the present invention.

(Materials)

Materials used to prepare a thermosetting polyurethane composition in the following examples and comparative examples are listed below.

(A) Polyol component

- Polyolefin polyol ("EPOL®" available from Idemitsu Kosan Co., Ltd., number average molecular weight: 2500)

(B) Polyisocyanate component

- Hexamethylene diisocyanate (HDI) monomer
- HDI-based polyisocyanate ("Coronate 2760" available from Tosoh Corporation)
- Modified polyisocyanate having hydrophilic unit ("Coronate 4022" available from Tosoh Corporation)
- Isophorone diisocyanate (IPDI)-based polyisocyanate ("Desmodur I" available from Sumika Bayer Urethane Co., Ltd.)

(C) Tackifier

- Hydrogenated petroleum resin-based tackifier ("I-MARV P-100" available from Idemitsu Kosan Co., Ltd.)

(D) Catalyst
Dimethyltin dilaurate ("Fomrez catalyst UL-28" available from Momentive)

Coronate 2760 is a mixture of allophanate-modified HDI and an HDI trimer. Coronate 4022 is obtained by reacting an ether polyol having three or more ethylene oxide units per molecule on average with HDI or a polyisocyanate synthesized from starting materials of HDI monomers.

(Example 1)

First, a solid hydrogenated petroleum resin-based tackifier was added to a polyolefin polyol whose temperature was controlled to 120°C, and the mixture was stirred so that a tackifier masterbatch containing the tackifier dissolved in the polyolefin polyol was obtained. Here, the tackifier content in the tackifier masterbatch was adjusted to 30 wt%.

An amount of 100 parts by weight of the polyolefin polyol, 12.5 parts by weight of the HDI-based polyisocyanate, 6.3 parts by weight of the IPDI-based polyisocyanate, 150 parts by weight of the tackifier masterbatch, and 0.02 parts by weight of the catalyst were mixed with stirring using an oscillating model agitator. Thereby, a thermosetting polyurethane composition having an $\alpha$ ratio of 1.63 was prepared.

The obtained thermosetting polyurethane composition was fed into the molding machine 20 shown in Fig. 2. The thermosetting polyurethane composition was crosslinked and cured at a furnace temperature of 70°C for a furnace time of 10 minutes while being transported in the state of being sandwiched between the paired release liners (PET films with release-treated surfaces) 21, and thereby a sheet with the release liners 21 was obtained. The sheet was crosslinked in the heating machine 24 whose temperature was adjusted to 70°C for 12 hours, so that the optically clear adhesive sheet 12 having the release liner 21 on each surface and containing a cured product of the thermosetting polyurethane composition (hereinafter, such a sheet is also referred to as an "optically clear adhesive sheet with release liners") was produced.

Fig. 3 shows a schematic cross-sectional view of an optically clear adhesive sheet with release liners of Example 1. As shown in Fig. 3, the obtained optically clear adhesive sheet with release liners was a laminate sequentially including the release liner 21, the optically clear adhesive sheet 12 containing the cured product of the thermosetting polyurethane composition, and the release liner 21. The optically clear adhesive sheet 12 had a thickness of 150 $\mu$m.

(Examples 2 to 25 and Comparative Examples 1 to 8)

Optically clear adhesive sheets with release liners of Examples 2 to 25 and Comparative Examples 1 to 8 were each produced by a procedure similar to that in Example 1, except that the composition and the thickness of the sheet were changed as shown in the following Tables 1 to 3.

(Optically clear adhesive sheet characteristics and evaluation)

The physical properties of the optically clear adhesive sheets produced in the examples and comparative examples were determined and evaluated by the following methods. The following Tables 1 to 3 show the results.

(1) Moisture absorbance after high-temperature, high-humidity test

An optically clear adhesive sheet with release liners was taken out of a heating machine whose temperature was adjusted to 70°C to an environment with a temperature of 25°C and a humidity of 40%. The release liner on each

surface of the optically clear adhesive sheet was immediately peeled off. A glass plate was bonded to one of the surfaces of the optically clear adhesive sheet, and the other surface was left exposed. Two such optically clear adhesive sheets were prepared in each of the examples and comparative examples. The optically clear adhesive sheets were exposed to a high-temperature, high-humidity environment with a temperature of 85°C and a humidity of 85% for three hours. The weight of each optically clear adhesive sheet was measured before and after the exposure, so that the moisture absorption coefficient was calculated from the following formula.

$$\text{Moisture absorbance (ppm)} = (\text{weight after exposure} - \text{weight before exposure})/(\text{weight before exposure})$$

The moisture absorption coefficient was calculated based on the weight of the optically clear adhesive sheet alone, excluding the weight of the glass plate.

(2) Shear storage modulus (G')

The shear storage modulus of the optically clear adhesive sheet was measured using a viscoelasticity measuring device "Physica MCR301" available from Anton Paar Germany GmbH. The measuring plate used was PP12, and the measuring conditions were a strain of 0.1%, a frequency of 1 Hz, and a cell temperature of 25°C to 100°C (temperature rise rate: 3°C/min). The following Tables 1 to 3 show the shear storage moduli measured at 85°C.

(3) Adhesive strength

A 180° peel test was conducted by the following method to measure the adhesive strength (N/25 mm). Fig. 4 shows schematic views for illustrating the method for evaluating the adhesive strength of the optically clear adhesive sheets of examples and comparative examples. The optically clear adhesive sheet with release liners was cut into a sample having a size of 75 mm (length) × 25 mm (width). One of the release liners of this sample was peeled off, and the exposed optically clear adhesive sheet 12 of the sample was bonded to a microscope slide 31 made of glass (i.e., glass slide) having a size of 75 mm (length) × 25 mm (width). The members were retained in this state under a pressure of 0.4 MPa for 30 minutes, so that the optically clear adhesive sheet 12 and the microscope slide 31 were bonded to each other. The other release liner on the side opposite to the microscope slide 31 was then peeled off, and a PET sheet ("Melinex® S" available from Teijin DuPont Films) 32 having a thickness of 125 μm was bonded to the surface of the optically clear adhesive sheet 12 on the side opposite to the microscope slide 31 as shown in Fig. 4(a).

The laminate shown in Fig. 4(a) was then left to stand in a normal-temperature, normal-humidity environment (temperature: 23°C, humidity: 50%) for 12 hours. The adhesive strength of the optically clear adhesive sheet 12 to the microscope slide 31 was measured by pulling the PET sheet 32 in a 180° direction as shown in Fig. 4(b) such that the optically clear adhesive sheet 12 was separated from the microscope slide 31 at the interface therebetween. In each of the examples and comparative examples, two samples were prepared for the measurement. The average of the obtained two measurement values was used as the measurement result in each of the examples and comparative examples.

(4) Optical characteristics after standing at high temperature and high humidity

One of the release liners of each optically clear adhesive sheet with release liners was peeled off, and the exposed optically clear adhesive sheet of the sample was bonded to a microscope slide (made of soda-lime glass). The members were retained in this state under a pressure of 0.4 MPa for 30 minutes, so that the optically clear adhesive sheet and the microscope slide were bonded to each other. The other release liner on the side opposite to the microscope slide was then peeled off. The resulting sample was left to stand in a high-temperature, high-humidity environment (85°C, 85%) for 168 hours. Thereafter, the optically clear adhesive sheet was visually observed and evaluated based on the following criteria.
Good: the sheet did not turn white.
Poor: the sheet turned white.

(5) Delay bubbles after standing at high temperature and high humidity

The release liner on one surface of the optically clear adhesive sheet with release liners was peeled off. The optically clear adhesive sheet was left to stand in a high-temperature, high-humidity (85°C, 85%) environment for three hours such that the sheet would absorb moisture to saturation. The optically clear adhesive sheet was then bonded to a glass coverslip using a vacuum bonding machine. The release liner on the surface opposite to the glass coverslip was

peeled off. The optically clear adhesive sheet was placed in an oven and left to stand in a high-temperature, normal-humidity (95°C) environment for one day such that the moisture in the sheet would evaporate. Under the high-temperature, normal-humidity conditions, the temperature was controlled to 95°C using a convection oven, but the humidity was not controlled. The interface between the glass coverslip and the optically clear adhesive sheet taken out of the oven was visually observed and evaluated based on the following criteria.
Absent: the interface did not include peeling spots in which the sheet peeled from the glass coverslip.
Present: the interface included peeling spots.

(6) Dimensional stability after standing at high temperature

The release liner on one surface of the optically clear adhesive sheet with release liners was peeled off, and the exposed optically clear adhesive sheet was bonded to a microscope slide (made of soda-lime glass). The workpiece was retained in this state at a pressure of 0.4 MPa for 30 minutes, so that the optically clear adhesive sheet and the microscope slide were bonded to each other. The workpiece was then left to stand in a normal-temperature, normal-humidity indoor environment for 24 hours. The workpiece was placed in an oven and left to stand in a high-temperature, normal-humidity (85°C) environment for 300 hours. The optically clear adhesive sheet taken out of the oven was visually observed for changes in sheet shape, and evaluated based on the following criteria.
Good: the sheet shape did not change.
Poor: the sheet shape changed.

(7) Capability to conform to uneven surface after standing at high temperature

The release liner on one surface of the optically clear adhesive sheet with release liners was peeled off. The optically clear adhesive sheet was then bonded to a glass plate with a teaspoon of ϕ100- to 200-μm glass beads scattered thereon, using a vacuum bonding machine. The glass plate and the optically clear adhesive sheet were left to stand in a high-temperature, normal-humidity (85°C) environment for one day. The interface between the glass plate and the optically clear adhesive sheet after the standing was observed with a video microscope at 100x magnification. The observation results were evaluated based on the following criteria. The following term "independent air bubble(s)" means air bubble(s) that was/were generated at the interface between the glass plate and the optically clear adhesive sheet and appeared as dot(s) formed around each glass bead. The following term "continuous air bubble(s)" means air bubble(s) formed by chained independent air bubbles.
Good: neither independent air bubbles nor continuous air bubbles were generated.
Fair: independent air bubble(s) was/were generated.
Poor: continuous air bubble(s) was/were generated.

[Table 1]

| | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|
| Sheet thickness (μm) | 150 | 1500 | 1500 | 1500 | 1500 | 1500 | 1500 | 1500 | 1500 | 1500 | 1500 | 1500 | 1500 | 1500 |
| α ratio | 1.63 | 1.7 | 1.6 | 1.7 | 1.7 | 1.7 | 1.65 | 1.75 | 1.8 | 1.7 | 1.7 | 1.85 | 1.7 | 1.75 |
| Isocyanate used | IPDI:Coronate 4022 | HDI monomer:Coronate 4022 | | | | Coronate 2760:Coronate 4022 | | | | | | | | |
| Isocyanate ratio (mole ratio) | 1:1 | 1:1 | | | | 1:1 | | | | 1:2 | 3:2 | 1:1 | 9:1 | 3:1 |
| Moisture absorption coefficient after high-temperature, high-humidity test (ppm) | 2745 | 3318 | 3169 | 3141 | 2988 | 2993 | 3177 | 3233 | 3085 | 3531 | 2883 | 3151 | 2821 | 3067 |
| Shear storage modulus G' ($10^3$ Pa) | 9.64 | 11.1 | 26.3 | 16.1 | 7.9 | 18.5 | 28.2 | 12.2 | 7.3 | 16.2 | 22.4 | 4.3 | 8.9 | 7.8 |
| Adhesive strength (N/25 mm) | 9.6 | 8.21 | 2.59 | 5.14 | 17.94 | 4.25 | 3.31 | 8.23 | 12.37 | 3.98 | 4.64 | 18.08 | 17.7 | 12.6 |
| Optical characteristics after standing at high temperature, high humidity | Good | Good | Good | Good | Good | Good | Good | Good | Good | Good | Good | Good | Good | Good |
| Delay bubbles after standing at high temperature, high humidity | Absent | Absent | Absent | Absent | Absent | Absent | Absent | Absent | Absent | Absent | Absent | Absent | Absent | Absent |
| Dimensional stability after standing at high temperature | Good | Good | Good | Good | Good | Good | Good | Good | Good | Good | Good | Good | Good | Good |
| Capability to conform to uneven surface after standing at high temperature | Good | Fair | Fair | Good | Good | Good | Fair | Good | Good | Good | Good | Good | Good | Good |

[Table 2]

| | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|
| Sheet thickness (μm) | 1500 | | | | | | | | | | |
| α ratio | 1.60 | 1.63 | 1.67 | 1.70 | 1.73 | 1.54 | 1.57 | 1.60 | 1.64 | 1.67 | 1.70 |
| Isocyanate used | IPDI:Coronate 4022 | | | | | | | | | | |
| Isocyanate ratio (mole ratio) | 1:1 | | | | | 2:1 | | | | | |
| Moisture absorption coefficient after high-temperature, high-humidity test (ppm) | 3406 | 2521 | 3321 | 3447 | 3328 | 3002 | 3122 | 3356 | 3331 | 3521 | 3273 |
| Shear storage modulus G' ($10^3$ Pa) | 23.9 | 19.9 | 14.1 | 9.93 | 7.56 | 35.2 | 30.5 | 15.6 | 10.8 | 8.52 | 5.71 |
| Adhesive strength (N/25 mm) | 8.91 | 12.7 | 27.13 | 31.28 | 32.62 | 9.23 | 24.01 | 11.72 | 48.83 | 28.93 | 27.37 |
| Optical characteristics after standing at high temperature, high humidity | Good | Good | Good | Good | Good | Good | Good | Good | Good | Good | Good |
| Delay bubbles after standing at high temperature, high humidity | Absent | Absent | Absent | Absent | Absent | Absent | Absent | Absent | Absent | Absent | Absent |
| Dimensional stability after standing at high temperature | Good | Good | Good | Good | Good | Good | Good | Good | Good | Good | Good |
| Capability to conform to uneven surface after standing at high temperature | Good | Good | Good | Good | Good | Good | Good | Good | Good | Good | Good |

[Table 3]

| | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| Sheet thickness (μm) | 150 | 150 | 150 | 150 | 150 | 150 | 150 | 1500 |
| α ratio | 1.4 | 1.4 | 1.8 | 1.9 | 1.4 | 1.6 | 1.7 | 1.7 |
| Isocyanate used | IPDI:Coronate 4022 | | Coronate 4022 | | IPDI | | | Coronate 2760 |
| Isocyanate ratio (mole ratio) | 1:3 | 1:10 | Only one isocyanate was used (no blending) | | | | | |
| Moisture absorption coefficient after high-temperature, high-humidity test (ppm) | 3755 | 3603 | 4737 | 4737 | 2900 | Melted | Melted | 2531 |
| Shear storage modulus G' ($10^3$ Pa) | 24.2 | 21.1 | 4.64 | 8.64 | 45.0 | Melted | Melted | 7.6 |
| Adhesive strength (N/25 mm) | 0.6 | 0.4 | 3.66 | 6.8 | 1.2 | Melted | Melted | 33.7 |
| Optical characteristics after standing at high temperature, high humidity | Good | Good | Good | Good | Poor | - | - | Poor |
| Delay bubbles after standing at high temperature, high humidity | Present | Present | Present | Present | Absent | - | - | Absent |
| Dimensional stability after standing at high temperature | Good | Good | Good | Good | Good | - | - | Good |
| Capability to conform to uneven surface after standing at high temperature | Poor | Poor | Good | Good | Good | - | - | Good |

Tables 1 and 2 show that the optically clear adhesive sheets of Examples 1 to 25 were each obtained using a mixture of the modified polyisocyanate having a hydrophilic unit ("Coronate 4022" from Tosoh Corporation) and a polyisocyanate having no hydrophilic unit, and had a moisture absorption coefficient after the high-temperature, high-humidity test controlled to 3600 ppm or lower. These optically clear adhesive sheets of Examples 1 to 25 had appropriately controlled hydrophilicity and caused no whitening or delay bubbles after being left to stand at a high temperature and a high humidity. The optically clear adhesive sheets of Examples 1 to 25 also had a shear storage modulus at 85°C controlled to $4 \times 10^3$ Pa or higher, and were therefore excellent in dimensional stability and capability to conform to

uneven surfaces after being left to stand at a high temperature.

Table 3 shows that the optically clear adhesive sheets of Comparative Examples 1 and 2 each had a high proportion of the modified polyisocyanate having a hydrophilic unit. The optically clear adhesive sheets of Comparative Examples 3 and 4 were formed using only the modified polyisocyanate having a hydrophilic unit. As a result, the optically clear adhesive sheets of Comparative Examples 1 to 4 each had a moisture absorption coefficient after the high-temperature, high-humidity test of higher than 3600 ppm. Thus, the optically clear adhesive sheets of Comparative Examples 1 to 4 caused delay bubbles after being left to stand at a high temperature and a high humidity. Also, the optically clear adhesive sheets of Comparative Examples 1 and 2 had high hydrophilicity and a high shear storage modulus at 85°C, and therefore had poor capability to conform to uneven surfaces.

Table 3 shows that the optically clear adhesive sheets of Comparative Examples 5 to 8 were each formed using only a modified polyisocyanate having no hydrophilic unit, and therefore turned white after being left to stand at a high temperature and a high humidity. The optically clear adhesive sheets of Comparative Examples 6 and 7 each contained a very large amount of isocyanate groups, and were therefore not formed into a sheet due to insufficient curing.

REFERENCE SIGNS LIST

| | |
|---|---|
| 10 | Display device |
| 11 | Display panel |
| 11A | Bezel |
| 12 | Optically clear adhesive sheet |
| 13 | Touchscreen |
| 14 | Transparent cover panel |
| 20 | Molding machine |
| 21 | Release liner |
| 22 | Molding roller |
| 23 | Thermosetting polyurethane composition |
| 24 | Heating machine |
| 31 | Microscope slide |
| 32 | PET sheet |

**Claims**

**1.** An optically clear adhesive sheet comprising:

a heat-cured polyurethane,
the heat-cured polyurethane being a cured product of a thermosetting polyurethane composition containing a polyol component and a polyisocyanate component,
the polyisocyanate component containing both a polyisocyanate having a hydrophilic unit and a polyisocyanate having no hydrophilic unit,
the optically clear adhesive sheet showing a moisture absorption coefficient of 3600 ppm or lower after being subjected to a test in which the sheet is left in a high-temperature, high-humidity environment with a temperature of 85°C and a humidity of 85% for three hours.

**2.** The optically clear adhesive sheet according to claim 1,
wherein the optically clear adhesive sheet has a shear storage modulus at 85°C of $4 \times 10^3$ Pa or higher.

**3.** The optically clear adhesive sheet according to claim 2,
wherein the polyisocyanate having no hydrophilic unit is an aliphatic isocyanate.

**4.** A method for producing the optically clear adhesive sheet according to any one of claims 1 to 3, the method comprising the steps of:

preparing the thermosetting polyurethane composition by mixing the polyol component and the polyisocyanate component with stirring; and
curing the thermosetting polyurethane composition.

**5.** A laminate comprising:

the optically clear adhesive sheet according to any one of claims 1 to 3;
a first release liner covering one surface of the optically clear adhesive sheet; and
a second release liner covering the other surface of the optically clear adhesive sheet.

**6.** A bonded structure comprising:

a first adherend;
a second adherend; and
the optically clear adhesive sheet according to any one of claims 1 to 3 bonding the first adherend and the second adherend to each other.

FIG.1

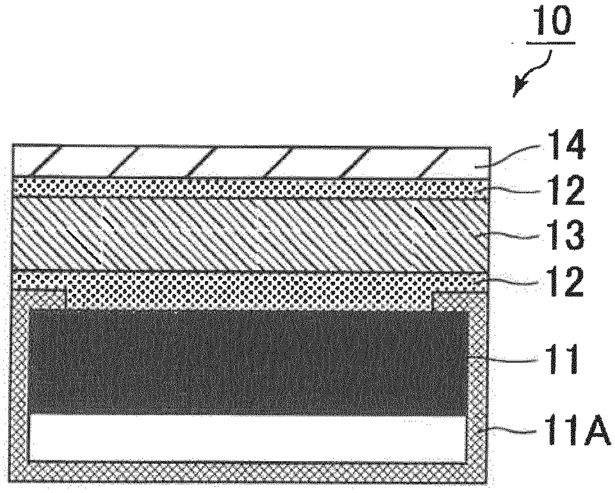


FIG.2

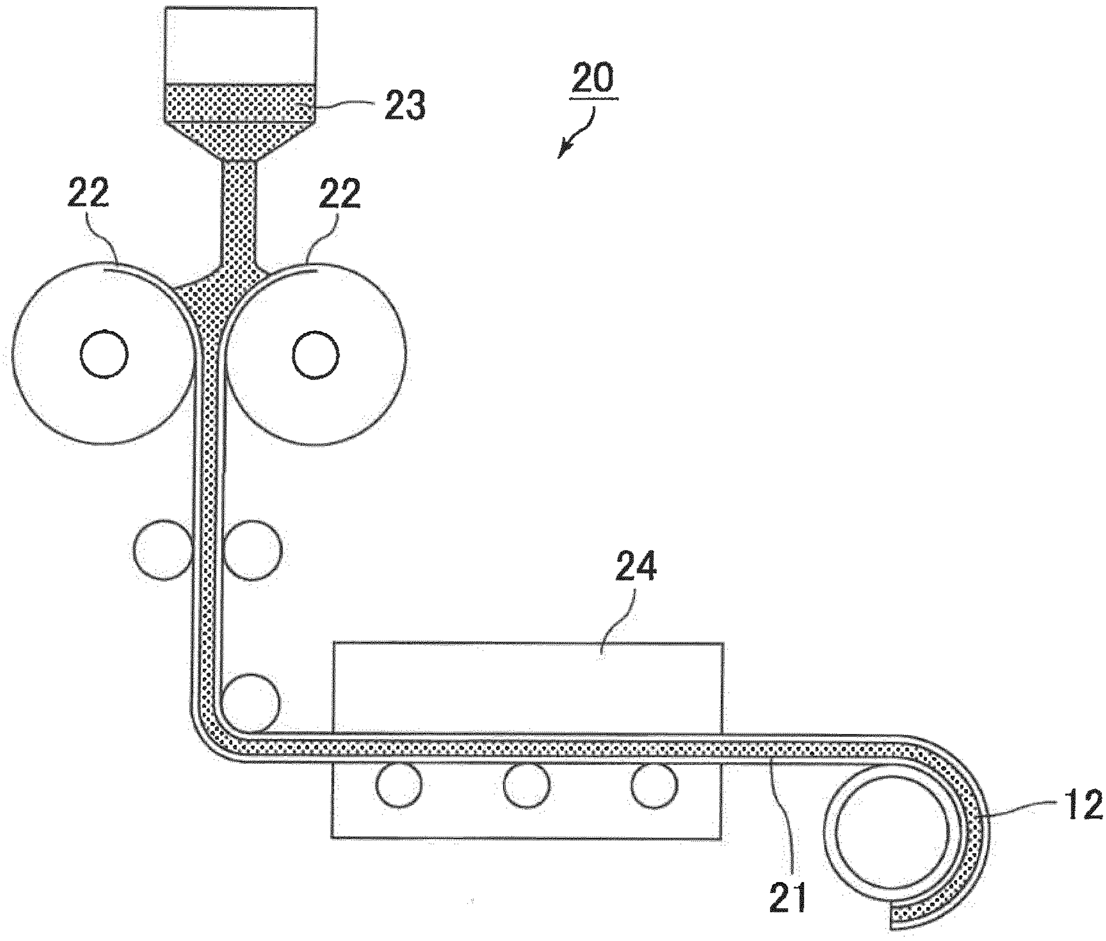

FIG.3

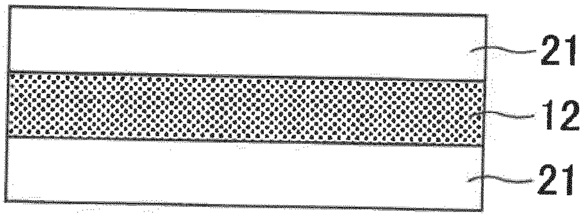


FIG.4

(a)

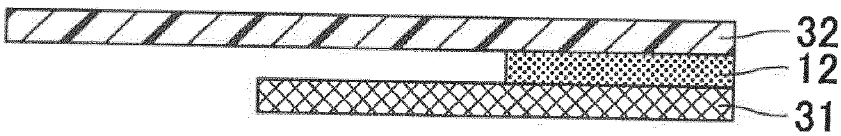


(b)

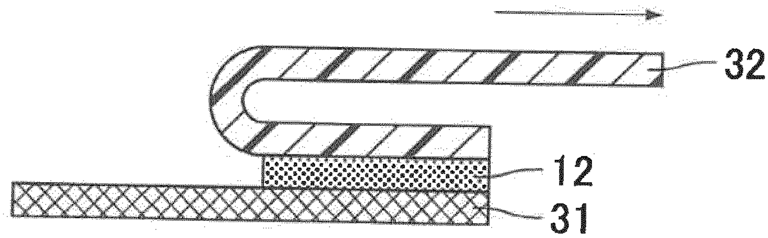

**INTERNATIONAL SEARCH REPORT**

International application No. PCT/JP2017/044362

A. CLASSIFICATION OF SUBJECT MATTER
Int.Cl. C09J7/00(2018.01)i, C08G18/72(2006.01)i, C09J175/04(2006.01)i

According to International Patent Classification (IPC) or to both national classification and IPC

B. FIELDS SEARCHED

Minimum documentation searched (classification system followed by classification symbols)
Int.Cl. C09J1/00-201/10, C08K3/00-13/08, C08L1/00-101/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2013-018856 A (DAINIPPON INK AND CHEMICALS) 31 January 2013, claims, paragraphs [0006], [0034], [0039]-[0041], [0061], examples (Family: none) | 1-6 |
| A | JP 2013-136731 A (NIPPON POLYURETHANE IND CO., LTD.) 11 July 2013, claims, examples (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07.02.2018 | 20.02.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2017/044362

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-018871 A (NIPPON CARBIDE KOGYO KK) 31 January 2013, claims, paragraph [0072], examples (Family: none) | 1-6 |
| A | WO 2016/181857 A1 (BANDO CHEMICAL IND.) 17 November 2016, claims, examples & CN 107532044 A & KR 20170129223 A & TW 201641636 A | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP H09281336 A
- JP H1044293 A
- JP 2015224320 A

### Non-patent literature cited in the description

- **R. F. FEDORS.** *Polym. Eng. Sci.,* 1974, vol. 14 (2), 147-154
- Study on Solubility Parameter of Paint Additives. Research on Coatings. Kansai Paint Co., Ltd, October 2010, vol. 152